# EUROPEAN PATENT SPECIFICATION

(11) **EP 3 918 360 B1**
(45) Date of publication and mention of the grant of the patent: **07.06.2023**
(21) Application number: 20706104.5
(22) Date of filing: 30.01.2020
(51) Int. Cl.: G01S 17/894, G01S 17/931, G01S 15/931, G01S 7/00, G01S 7/02

(54) **A SPATIAL SENSOR SYNCHRONIZATION SYSTEM USING A TIME-DIVISION MULTIPLE ACCESS COMMUNICATION SYSTEM**
SYSTEM ZUR SYNCHRONISIERUNG RÄUMLICHER SENSOREN MITHILFE EINES ZEITMULTIPLEX-VIELFACHZUGANG-KOMMUNIKATIONSSYSTEMS
SYSTÈME DE SYNCHRONISATION DE CAPTEUR SPATIAL À L'AIDE D'UN SYSTÈME DE COMMUNICATION À ACCÈS MULTIPLE PAR RÉPARTITION DANS LE TEMPS

(30) Priority: 01.02.2019 EP 19305124
(43) Date of publication of application: 08.12.2021
(73) Proprietor: Terabee S.A.S., 01630 Saint-Genis Pouilly (FR)
(72) Inventor: KOVERMANN, Jan W., 74520 Valleiry (FR); RUFFO, Massimiliano, 1224 Chêne-Bougerie (CH)
(74) Representative: Weihs, Bruno Konrad
(86) International application number: PCT/EP2020/052354
(87) International publication number: WO 2020/157235

(56) References cited:
- WO-A2-2017/196583
- US-A1- 2017 082 737
- US-A1- 2017 328 993
- HAMER MICHAEL ET AL: "Self-Calibrating Ultra-Wideband Network Supporting Multi-Robot Localization", IEEE ACCESS, vol. 6, 9 May 2018 (2018-05-09), - 9 May 2018 (2018-05-09), pages 22292-22304, XP011683319, DOI: 10.1109/ACCESS.2018.2829020

## Description

### Technical field

The invention relates to a novel method and system for spatial sensor synchronization for one or more spatial sensors that are used together with a Time-Division Multiple Access (TDMA) communication system. Such TDMA communication system may be an Ultra Wide Band (UWB) positioning system. Preferably the spatial sensor is a distance measurement or anti-collision sensor.

### Background

Autonomous robots need at least two inputs to navigate: position to static infrastructure and anti-collision sensing for avoiding dynamic obstacles. In a typical application in industry or logistics, the relative positioning system to static infrastructure can be a UWB indoor positioning system and the collision avoidance functionality can be provided through the use of Time of Flight (ToF) sensors - at least one per autonomous robot.

ToF sensors, especially when based on phase measurement principle, can suffer from false or corrupted measurements due to cross talk between at least two ToF sensors measuring at the same time, especially when the illumination of the two devices overlap. This is a likely scenario in the case at least two robots operate in the same static infrastructure.

Systems for crosstalk avoidance exist based on synchronization over cable, an example for an implementation of which can be found in PCT/EP2018/072978. For freely moving robots this method is not applicable, a wireless solution as described above is necessary. US2017/0082737A1 discloses a method for synchronizing a system clock of several Lidars.

Departing from the known systems as described above, one aim of the present invention is to find a method and a system that prevent false or corrupted measurements.

### Summary of the invention

The invention provides a spatial sensor synchronization system using a Time-Division Multiple Access (TDMA) communication system, intended for a plurality of entities evolving inside the TDMA communication system, whereby each one of the plurality of entities comprises a spatial sensor and a tag enabled to communicate in the TDMA communication system, further whereby each spatial sensor is enabled to make a spatial measurement during a determined active time period, further whereby the tags from the plurality of entities are addressed in sequence by the TDMA communication system with a determined sequence period separating two subsequent addresses in the TDMA communication system. Each of the tags comprises electrical trigger output means configured to output an electrical trigger to the sensor of the corresponding entity at the time of being addressed by the TDMA communication system. Each of the sensors comprises electrical trigger input means connected to the electrical trigger output means, and configured to initiate a spatial sensor measurement for each received electrical trigger. A duration of the determined sequence period is equal or greater than a duration of the determined active time period.

In a preferred embodiment of the invention, the spatial sensor is a distance measurement or anti-collision sensor.

In a further preferred embodiment, the TDMA communication system is an Ultra Wide Band (UWB) system.

In a further preferred embodiment, the spatial sensor is a Time of Flight (ToF) sensor, and the TDMA communication system is an Ultra Wide Band (UWB) system.

In a further preferred embodiment, at least one of the plurality of entities is intended to comprise at least an additional ToF sensor, and that the additional ToF sensor is also triggered by the received electrical trigger.

In a second aspect, the invention provides a method for spatial sensor synchronization for one or more spatial sensors that are used together with a Time-Division Multiple Access (TDMA) communication system. Each spatial sensor is enabled to make a spatial measurement during a determined active time period. The method comprises steps of: the one or more spatial sensors connects to the TDMA system; the TDMA system addresses the one or more spatial sensors with a determined sequence period separating two subsequent addresses in the TDMA communication system, the one or more spatial sensors extracts a timing signalat a time of being addressed by the TDMA system; the one or more spatial sensors aligns to the timing signal; use the timing signal as a trigger signal to trigger one or a series of spatial sensors from the one or more spatial sensors for measuring; whereby a duration of the sequence period is equal or greater than a duration of the determined active period; and repeating the method by starting again at the step of the one of more spatial sensors connecting to the TDMA system.

In a further preferred embodiment, at the step in which the one or more spatial sensors aligns to the timing signal, the one or more spatial sensors waits for the timing signal to arrive.

In a further preferred embodiment, at the step in which the one or more spatial sensors aligns to the timing signal, an internal clock respectively of the one or more spatial sensors synchronizes with the timing signal, and each one of the one or more spatial sensors waits a predefined time before measuring.

In a further preferred embodiment, prior to implementing the step of the one or more spatial sensors extracting a timing signal, the method further comprises a step of shaping and sending the timing signal by the TDMA device such that it provides right electrical characteristics for a trigger input of each respective one or more spatial sensors.

In a further preferred embodiment, the step of using the timing signal further comprises a step of providing the one or more spatial sensors in a daisy chain, whereby each spatial sensor receives, delays and re-emits the trigger signal, whereby each spatial sensor delays such that no crosstalk from measurements occurs.

In a further preferred embodiment, the step of using the timing signal further comprises a step of providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

In a further preferred embodiment, the step of using the timing signal further comprises a step of providing the one or more spatial sensors in a sensor hub with the one or more spatial sensors connected to it, the sensor hub being configured to implement a step of determining a measurement sequence for the one or more spatial sensors in such a way that no crosstalk from measurements occurs.

In a further preferred embodiment, the sensor hub is further configured to implement a step of optimizing a measurement speed depending on a geometrical configuration of the one on more spatial sensors.

### Brief description of the figures

The invention will be explained through the description of preferred embodiments, and in reference to the drawings, wherein
Figure 1 illustrates an example system comprising a plurality of robots and a target intended to illustrate a problem addressed by the invention;
Figure 2 schematically illustrates an example embodiment of a system according to the invention;
Figure 3 schematically illustrates an internal configuration of an autonomous robot according to an example embodiment of the invention;
Figure 4 contains a timing diagram for an example system according to the invention; and
Figure 5 contains a flowchart illustrating an example implementation of the method according to the invention.

### Detailed description of preferred embodiments of the invention

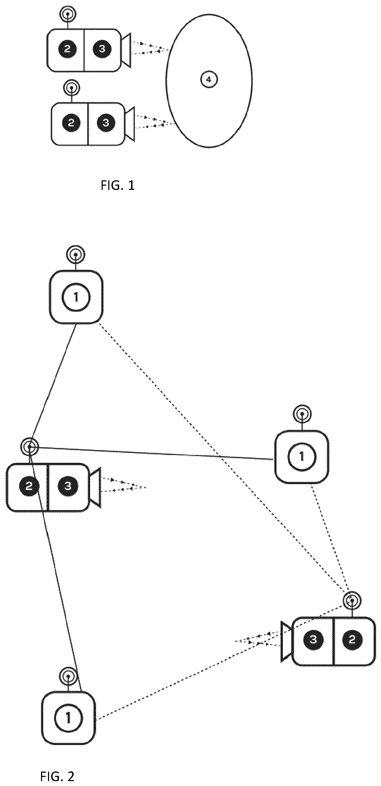

Figure 1 illustrates the problem that is overcome by the use of the present invention. Each of a plurality of autonomous robots (2, 3) uses an active sensing technology with an active sensor 3 that may interfere in case of simultaneous measurement. In the case in which at least two robots measure and point to a same target 4 at the same time, interference may appear and lead to erroneous measurements and in some cases accidents or lost navigation. In the case each of the robots is equipped with an UWB-based absolute positioning system 2, the invention provides a method of synchronizing the measurements of the active sensors 3 in such way that no interference occurs.

In one preferred embodiment the present invention departs from two prior art technologies, namely UWB positioning (see for example reference PMC4883398) and Time-of-Flight (ToF) sensors.

ToF sensors work in a pulsed manner according to the following 2 phases:
- an active phase where a signal is sent out and its reflection from a target is received at the same time; and
- a passive phase where the received signal is treated, calibrated and communicated.

The active phase is typically short compared to the passive phase, nevertheless it is in the active phase that crosstalk may occur as explained hereafter: if in a first ToF sensor that sent out a signal that is reflected from the target and received in the first ToF sensor, one of the signals from another ToF sensor is also received in the first ToF, in superposition.

UWB systems typically comprise a number of UWB transceivers fixed to the static infrastructure in known positions (called 'anchors') and portable UWB transceivers (called `tags') that communicate with the anchors and calculate their relative position to the anchors and therefore to the static infrastructure using the Time Difference Of Arrival (TDOA) principle (See for example reference Multilateration). Since only one tag at a time can communicate with the anchors, the system is timed in a sequential way where one tag after the other communicates with the anchors to calculate its position (Time-Division Multiple Access (TDMA) principle, each tag has its own 'slot', see for example reference Time-division_multiple_access). Once all tags have finished calculating their position, the system starts over (system loop cycle time, typically ~100ms).

The idea underlying to the method and system according to the invention is to use the internal timing of the UWB system to trigger the measurements of the ToF sensors.

A preferred embodiment of the system according to the invention comprises:
- the UWB system which comprises an electrical trigger output on each tag, and is further configured such that each time a tag manages to calculate a valid absolute or relative position, it will output an electrical trigger output pulse. Preferably a configuration may be realized by means of a firmware modification in a conventional prior art UWB system;
- an electrical connection between the UWB tag and ToF sensor or ToF sensor hub inside an entity carrying both tag and sensor, such as for example a robot; and
- the ToF sensor or ToF sensor hub, which comprises an electrical trigger input and adapted firmware to receive and handle the internal triggering.

Given the TDMA principle, all trigger pulses from all tags in the system will occur sequentially with a minimum time between those, thus leaving time for each attached

ToF system to finish a ToF measurement without the risk of crosstalk with other systems. Preferably the minimum time is equal or greater than a duration of the active phase of the ToF system.

Referring to Figure 2, which schematically illustrates an example embodiment of a system according to the invention, the system comprises two main subsystems. The first main subsystem comprises the autonomous robots (2, 3) each with integrated active sensors 3. The second main subsystem comprises UWB transceivers or 'tags' 2 and UWB anchors 1. While the UWB anchors 1 are fixed in space, the autonomous robots (2, 3) may move in space and use their active sensors 3 for anti-collision and navigation purposes.

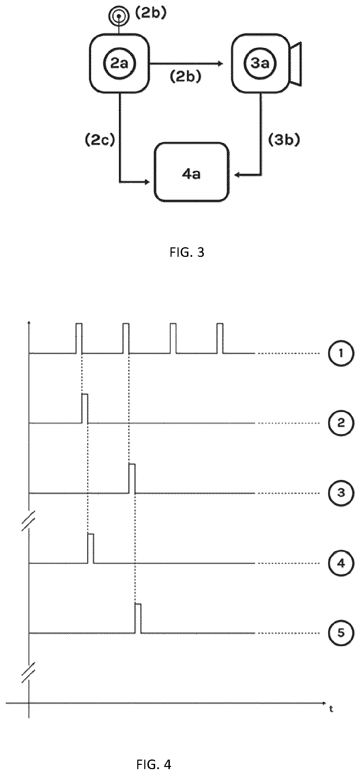

Figure 3 illustrates the internal configuration of an autonomous robot according to a preferred embodiment and configured to allow anti-interference operation according to the present invention. The internal configuration comprises an active sensor 3a with a connection 3b to a robot control system 4a. The connection 3b transports sensor data to the control system 4a to enable navigation and anti-collision functions. In addition, an UWB tag 2a together with its reception antenna 2b and data connection 2c for forwarding of position information to the robot control system 4a is part of the system. The inventive system further comprises an additional, direct connection 2b between the UWB tag 2a and the active sensor 3a. The connection 2b provides synchronization pulses from the UWB tag 2a to the active sensor 3a to allow interference-free operation of the active sensors in the case of multiple robots operating within the range of the active sensors 3a.

Figure 4 shows a timing diagram of the system. Line 1 is the TDMA communication between UWB anchors and tags (both not shown in Figure 4). Each pulse in line 1 illustrates a navigation message between the anchors and one tag (typically on an autonomous robot). The system (not shown in Figure 4) is managed in such a way that there is always only one tag communicating at the time, one after the other.

Once all tags have finished communicating the system starts over. Lines 2 and 3 show output pulses of the UWB tags embedded in the autonomous robots. These output pulses are derived from the TDMA pulses and are transmitted via connection 2b shown in Figure 3, to the active sensors 3a also shown in Figure 3. These pulses then trigger the measurement of the active sensors, the active sensing phases are shown in lines 4 and 5. In the case that the time between two TDMA pulses is longer than the active sensing time of the active sensors plus the inherent system delays (pulse selection and transmission), no interference of the active sensors will occur even on comparatively long time scales.

More generally, the invention is not restricted to the use of ToF as sensors, including 3D cameras and other active sensors based on the ToF principle. Instead other sensors potentially suffering crosstalk at the time of measurement may also be used, such as distance measurement sensors and anti-collision sensors based on ultrasound ranging. It may even be possible to make use of a variety of sensor types together, whereby crosstalk may or may not occur between each variety of sensor types.

Further, the invention is not either restricted to make use of a UWB system. More generally, any Time-Division Multiple Access communication system being used in common by a plurality of entities carrying one of the variety of sensors is suitable to implement the invention, as long as the TDMA system attributes a corresponding tag to each one of the plurality of entities and the tag may be adapted to work in a manner similar to that described for the embodiments using UWB tags and ToF.

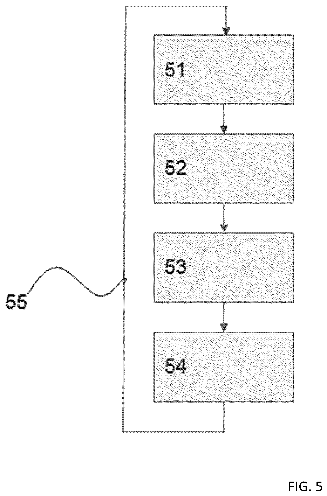

Referring now to Figure 5, this illustrates by means of a flowchart an example of a method for spatial sensor synchronization for one or more spatial sensors that are used together with a Time-Division Multiple Access (TDMA) communication system.

Figure 5 shows the following steps:
Box 51: the one or more spatial sensors connects to the TDMA system;
Box 52: the one or more spatial sensors extracts a timing signal from a TDMA device's output signal after having addressed the TDMA device within the TDMA system;
Box 53: the one or more spatial sensors aligns to the timing signal;
Box 54: use the timing signal as a trigger signal to trigger one or a series of spatial sensors from the one or more spatial sensors for measuring; and
Arrow line 55: repeat the method by starting again at the step of box 51.

In a preferred embodiment, the step of box 53, i.e., the step in which the one or more spatial sensors aligns to the timing signal, the action of « aligns » may be understood as a synchronization. In this step the sensor 'waits' for the timing signal to arrive. In a further preferred embodiment, the action of « aligns » means that an internal clock of the sensor gets synced with the timing signal and then the sensor waits a predefined time before measuring.

In a further preferred embodiment, the step of box 52 is preceded by a further step, wherein the timing signal is shaped and sent by the TDMA device such that it provides the right electrical characteristics for a trigger input of each respective one or more spatial sensors.

In a further preferred embodiment, the step of « use the timing signal » in box 54 involves providing the one or more spatial sensors in a daisy chain, whereby each spatial sensor receives, delays and re-emits the trigger signal, whereby each spatial sensor delays such that no crosstalk from measurements occurs. This is for example explained with respect to the timing diagram of figure 4.

In a further preferred embodiment, the step of « use the timing signal » in box 54 involves providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

In a further preferred embodiment, the step of « use the timing signal » in box 54 involves providing the one or more spatial sensors in a sensor hub with the one or more spatial sensors connected to it. The sensor hub is configured to implement a step of determining a measurement sequence for the one or more spatial sensors in such a way that no crosstalk from measurements occurs. In an further preferred embodiment, the sensor hub is further configured to implement a step of optimizing a measurement speed depending on a geometrical configuration of the one on more spatial sensors.

### References

PMC4883398
   https://www.ncbi.nlm.nih.gov/pmc/articles/PMC4883398/
Multilaterations
   https://en.wikipedia.org/wiki/Multilateration
Time-division_multiple access
   https://en.wikipedia.org/wiki/Time-division_multiple access

## Claims

1. A spatial sensor synchronization system using a Time-Division Multiple Access (TDMA) communication system, intended for a plurality of entities evolving inside the TDMA communication system, whereby each one of the plurality of entities comprises a spatial sensor and a tag enabled to communicate in the TDMA communication system, further whereby each spatial sensor is enabled to make a spatial measurement during a determined active time period, further whereby the tags from the plurality of entities are addressed in sequence by the TDMA communication system with a determined sequence period separating two subsequent addresses in the TDMA communication system, **characterised in that**
each of the tags comprising electrical trigger output means configured to output an electrical trigger to the sensor of the corresponding entity at the time of being addressed by the TDMA communication system,
each of the sensors comprising electrical trigger input means connected to the electrical trigger output means, and configured to initiate a spatial sensor measurement for each received electrical trigger,
whereby a duration of the sequence period is equal or greater than a duration of the determined active time period.

2. The system of claim 1, wherein the spatial sensor is a distance measurement or anti-collision sensor.

3. The system of either one of claims 1 and 2, wherein the TDMA communication system is an Ultra Wide Band (UWB) system.

4. The system of claim 1, wherein the spatial sensor is a Time of Flight (ToF) sensor, and the TDMA communication system is an Ultra Wide Band (UWB) system.

5. The system of claim 2, wherein at least one of the plurality of entities is intended to comprise at least an additional ToF sensor, and that the additional ToF sensor is also triggered by the received electrical trigger.

6. A method for spatial sensor synchronization for one or more spatial sensors that are used together with a Time-Division Multiple Access (TDMA) communication system, whereby each spatial sensor is enabled to make a spatial measurement during a determined active time period, the method comprising steps of:
the one or more spatial sensors connects to the TDMA system;
the TDMA system addresses the one or more spatial sensors with a determined sequence period separating two subsequent addresses in the TDMA communication system;
the one or more spatial sensors extracts a timing signal at a time of being addressed by the TDMA system; **characterised in that**
the one or more spatial sensors aligns to the timing signal;
use the timing signal as a trigger signal to trigger one or a series of spatial sensors from the one or more spatial sensors for measuring;
whereby a duration of the sequence period is equal or greater than a duration of the determined active time period; and
repeating the method by starting again at the step of the one of more spatial sensors connecting to the TDMA system.

7. The method of claim 6, whereby at the step in which the one or more spatial sensors aligns to the timing signal, the one or more spatial sensors waits for the timing signal to arrive.

8. The method of claim 6, whereby at the step in which the one or more spatial sensors aligns to the timing signal, an internal clock respectively of the one or more spatial sensors synchronizes with the timing signal, and each one of the one or more spatial sensors waits a predefined time before measuring.

9. The method of claim 6, wherein prior to implementing the step of the one or more spatial sensors extracting a timing signal, the method further comprises a step of shaping and sending the timing signal by the TDMA device such that it provides right electrical characteristics for a trigger input of each respective one or more spatial sensors.

10. The method of claim 6, wherein the step of using the timing signal further comprises a step of providing the one or more spatial sensors in a daisy chain, whereby each spatial sensor receives, delays and re-emits the trigger signal, whereby each spatial sensor delays such that no crosstalk from measurements occurs.

11. The method of claim 6, wherein the step of using the timing signal further comprises a step of providing the one or more spatial sensors in a star topology of spatial sensors where each one of the spatial sensors receives the trigger signal at the same time and each one of the spatial sensors delays a start of the measuring by a different amount of time chosen such that no crosstalk from measurements occurs.

12. The method of claim 6, wherein the step of using the timing signal further comprises a step of providing the one or more spatial sensors in a sensor hub with the one or more spatial sensors connected to it, the sensor hub being configured to implement a step of determining a measurement sequence for the one or more spatial sensors in such a way that no crosstalk from measurements occurs.

13. The method of claim 12, wherein the sensor hub is further configured to implement a step of optimizing a measurement speed depending on a geometrical configuration of the one on more spatial sensors.

## Patentansprüche

1. Raumsensor-Synchronisationssystem, das ein Zeitmultiplex-Vielfachzugriff-(TDMA)-Kommunikationssystem verwendet und für eine Vielzahl von Einheiten bestimmt ist, die sich innerhalb des TDMA-Kommunikationssystems entwickeln,
wobei jede der mehreren Einheiten einen Raumsensor und ein Etikett umfasst, das zur Kommunikation in dem TDMA-Kommunikationssystem befähigt ist,
wobei ferner jeder Raumsensor in die Lage versetzt wird, während einer bestimmten aktiven Zeitspanne eine Raummessung vorzunehmen,
wobei ferner die Etiketten aus der Vielzahl von Einheiten nacheinander durch das TDMA-Kommunikationssystem adressiert werden, wobei eine bestimmte Sequenzperiode zwei aufeinander folgende Adressen im TDMA-Kommunikationssystem trennt,
**dadurch gekennzeichnet, dass**
jedes der Etiketten elektrische Trigger-Ausgabemittel umfasst, die so ausgebildet sind, dass sie zum Zeitpunkt der Adressierung durch das TDMA-Kommunikationssystem einen elektrischen Trigger an den Sensor der entsprechenden Einheit ausgeben,
jeder der Sensoren elektrische Trigger-Eingabemittel umfasst, die mit den elektrischen Trigger-Ausgabemitteln verbunden und so ausgebildet sind, dass sie für jeden empfangenen elektrischen Trigger eine Raumsensormessung einleiten,
wobei die Dauer der Sequenzperiode gleich oder größer als die Dauer der bestimmten aktiven Zeitspanne ist.

2. System nach Anspruch 1, wobei der Raumsensor ein Abstandsmessungs- oder Antikollisionssensor ist.

3. System nach einem der Ansprüche 1 und 2, wobei das TDMA-Kommunikationssystem ein Ultra Wide Band (UWB)-System ist.

4. System nach Anspruch 1, wobei der Raumsensor ein Flugzeitsensor (Time of Flight, ToF) ist und das TDMA-Kommunikationssystem ein Ultra Wide Band (UWB)-System ist.

5. System nach Anspruch 2, wobei mindestens eine der mehreren Einheiten dazu bestimmt ist, mindestens einen zusätzlichen ToF-Sensor zu umfassen, und der zusätzliche ToF-Sensor ebenfalls durch den empfangenen elektrischen Trigger ausgelöst wird.

6. Verfahren zur Raumsensorsynchronisation für einen oder mehrere Raumsensoren, die zusammen mit einem Zeitmultiplex-Vielfachzugriff-(TDMA)-Kommunikationssystem verwendet werden,
wobei jeder Raumsensor in die Lage versetzt wird, während einer bestimmten aktiven Zeitspanne eine Raummessung durchzuführen, wobei das Verfahren die folgenden Schritte umfasst:
der eine oder die mehreren Raumsensoren werden mit dem TDMA-System verbunden;
das TDMA-System adressiert den einen oder die mehreren Raumsensoren mit einer bestimmten Sequenzperiode, die zwei aufeinander folgende Adressen im TDMA-Kommunikationssystem trennt;
der eine oder die mehreren Raumsensoren ein Zeitsignal zu einem Zeitpunkt extrahieren, zu dem sie vom TDMA-System adressiert werden;
**dadurch gekennzeichnet, dass**
der eine oder die mehreren Raumsensoren auf das Zeitsignal ausgerichtet werden;
das Zeitsignal als Triggersignal verwenden, um einen oder eine Reihe von Raumsensoren von dem einen oder den mehreren Raumsensoren zur Messung auszulösen;
wobei eine Dauer der Sequenzperiode gleich oder größer als eine Dauer der bestimmten aktiven Zeitspanne ist; und
Wiederholen des Verfahrens, indem erneut mit dem Schritt des Anschlusses eines oder mehrerer Raumsensoren an das TDMA-System begonnen wird.

7. Verfahren nach Anspruch 6, wobei in dem Schritt, in dem der eine oder die mehreren Raumsensoren sich auf das Zeitsignal ausrichten, der eine oder die mehreren Raumsensoren auf das Eintreffen des Zeitsignals warten.

8. Verfahren nach Anspruch 6, wobei in dem Schritt, in dem sich der eine oder die mehreren Raumsensoren auf das Zeitsignal ausrichten, ein interner Taktgeber des einen oder der mehreren Raumsensoren mit dem Zeitsignal synchronisiert wird und jeder des einen oder der mehreren Raumsensoren eine vordefinierte Zeit vor der Messung wartet.

9. Verfahren nach Anspruch 6, wobei das Verfahren vor der Durchführung des Schritts, bei dem der eine oder die mehreren Raumsensoren ein Zeitsignal extrahieren, ferner einen Schritt umfasst, bei dem das Zeitsignal von der TDMA-Vorrichtung so geformt und gesendet wird, dass es die richtigen elektrischen Eigenschaften für einen Triggereingang jedes entsprechenden einen oder mehrerer Raumsensoren aufweist.

10. Verfahren nach Anspruch 6, wobei der Schritt der Verwendung des Zeitsignals ferner einen Schritt der Bereitstellung des einen oder der mehreren Raumsensoren in einer Daisy Chain umfasst,
wobei jeder Raumsensor das Triggersignal empfängt, verzögert und wieder aussendet, wobei jeder Raumsensor so verzögert, dass kein Übersprechen von Messungen auftritt.

11. Verfahren nach Anspruch 6, wobei der Schritt der Verwendung des Zeitsignals ferner einen Schritt der Bereitstellung des einen oder der mehreren Raumsensoren in einer Sterntopologie von Raumsensoren umfasst,
wobei jeder der Raumsensoren das Triggersignal zur gleichen Zeit empfängt und jeder der Raumsensoren den Beginn der Messung um eine unterschiedliche Zeitspanne verzögert, die so gewählt wird, dass kein Übersprechen von Messungen auftritt.

12. Verfahren nach Anspruch 6, wobei der Schritt der Verwendung des Zeitsignals ferner einen Schritt des Bereitstellens des einen oder der mehreren Raumsensoren in einem Sensorknotenpunkt umfasst, an den der eine oder die mehreren Raumsensoren angeschlossen sind,
der Sensor-Hub so ausgebildet ist, dass er einen Schritt zur Bestimmung einer Messsequenz für den einen oder die mehreren Raumsensoren so durchführt, dass kein Übersprechen von Messungen auftritt.

13. Verfahren nach Anspruch 12, wobei der Sensor-Hub ferner so ausgebildet ist, dass er einen Schritt zur Optimierung einer Messgeschwindigkeit in Abhängigkeit von einer geometrischen Konfiguration des einen oder der mehreren Raumsensoren durchführt.

## Revendications

1. Système de synchronisation de capteur spatial utilisant un système de communication à accès multiple par répartition dans le temps (TDMA), prévu pour une pluralité d'entités évoluant à l'intérieur du système de communication TDMA, chacune de la pluralité d'entités comprenant un capteur spatial et une étiquette activée pour communiquer dans le système de communication TDMA, en outre chaque capteur spatial étant activé pour faire une mesure spatiale pendant une période de temps active déterminée, en outre les étiquettes provenant de la pluralité d'entités étant adressées en séquence par le système de communication TDMA avec une période de séquence déterminée séparant deux adresses subséquentes dans le système de communication TDMA, **caractérisé en ce que**
chacune des étiquettes comprend un moyen de sortie de déclenchement électrique configuré pour délivrer un déclenchement électrique au capteur de l'entité correspondante à l'instant d'adressage par le système de communication TDMA,
chacun des capteurs comprend un moyen d'entrée de déclenchement électrique connecté au moyen de sortie de déclenchement électrique, et configuré pour initier une mesure de capteur spatial pour chaque déclenchement électrique reçu,
une durée de la période de séquence étant égale ou supérieure à une durée de la période de temps active déterminée.

2. Système selon la revendication 1, le capteur spatial étant un capteur de mesure de distance ou d'anticollision.

3. Système selon l'une ou l'autre des revendications 1 et 2, le système de communication TDMA étant un système ultra large bande (UWB).

4. Système selon la revendication 1, le capteur spatial étant un capteur à temps de vol (ToF), et le système de communication TDMA étant un système ultra large bande (UWB).

5. Système selon la revendication 2, au moins une de la pluralité d'entités étant prévue pour comprendre au moins un capteur ToF additionnel, et ce capteur ToF additionnel étant également déclenché par le déclenchement électrique reçu.

6. Procédé de synchronisation de capteur spatial pour un ou plusieurs capteurs spatiaux qui sont utilisés ensemble avec un système de communication à accès multiple par répartition dans le temps (TDMA), chaque capteur spatial étant activé pour faire une mesure spatiale pendant une période de temps active déterminée, le procédé comprenant les étapes suivantes :
le ou les capteurs spatiaux se connectent au système TDMA ;
le système TDMA adresse le ou les capteurs spatiaux avec une période de séquence déterminée séparant deux adresses subséquentes dans le système de communication TDMA ;
le ou les capteurs spatiaux extraient un signal de synchronisation à un instant d'adressage par le système TDMA ;
**caractérisé en ce que**
le ou les capteurs spatiaux s'alignent au signal de synchronisation ;
le signal de synchronisation est utilisé comme signal de déclenchement pour déclencher un ou une série de capteurs spatiaux parmi le ou les capteurs spatiaux pour la mesure ;
une durée de la période de séquence étant égale ou supérieure à une durée de la période de temps active déterminée ; et
le procédé est répété en recommençant à l'étape du ou des capteurs spatiaux se connectant au système TDMA.

7. Procédé selon la revendication 6, à l'étape dans laquelle le ou les capteurs spatiaux s'alignent au signal de synchronisation, le ou les capteurs spatiaux attendant que le signal de synchronisation arrive.

8. Procédé selon la revendication 6, à l'étape dans laquelle le ou les capteurs spatiaux s'alignent au signal de synchronisation, une horloge interne respective du ou des capteurs spatiaux se synchronisant avec le signal de synchronisation, et chacun du ou des capteurs spatiaux attendant un instant prédéfini avant la mesure.

9. Procédé selon la revendication 6, avant l'exécution de l'étape du ou des capteurs spatiaux extrayant un signal de synchronisation, le procédé comprenant en outre une étape de mise en forme et d'envoi du signal de synchronisation par le dispositif TDMA de telle sorte qu'il fournit des caractéristiques électriques correctes pour une entrée de déclenchement de chacun d'un ou des capteurs spatiaux respectifs.

10. Procédé selon la revendication 6, l'étape d'utilisation du signal de synchronisation comprenant en outre une étape de fourniture du ou des capteurs spatiaux en guirlande, chaque capteur spatial recevant, retardant et renvoyant le signal de déclenchement, chaque capteur spatial retardant de telle sorte qu'aucune diaphonie des mesures ne se produit.

11. Procédé selon la revendication 6, l'étape d'utilisation du signal de synchronisation comprenant en outre une étape de fourniture du ou des capteurs spatiaux en une topologie en étoile de capteurs spatiaux où chacun des capteurs spatiaux reçoit le signal de déclenchement au même instant et chacun des capteurs spatiaux retarde un début de mesure d'une durée différente choisie de telle sorte qu'aucune diaphonie des mesures ne se produit.

12. Procédé selon la revendication 6, l'étape d'utilisation du signal de synchronisation comprenant en outre une étape de fourniture du ou des capteurs spatiaux en un centre de capteurs avec le ou les capteurs spatiaux connectés à celui-ci, le centre de capteurs étant configuré pour exécuter une étape de détermination d'une séquence de mesure pour le ou les capteurs spatiaux de telle manière qu'aucune diaphonie des mesures ne se produit.

13. Procédé selon la revendication 12, le centre de capteurs étant en outre configuré pour exécuter une étape d'optimisation d'une vitesse de mesure en fonction d'une configuration géométrique du ou des capteurs spatiaux.
